# EUROPEAN PATENT SPECIFICATION

(11) **EP 4 562 302 B1**
(45) Date of publication and mention of the grant of the patent: **08.04.2026**
(21) Application number: 23745570.4
(22) Date of filing: 28.07.2023
(51) Int. Cl.: B66C 1/10, F03D 80/50

(54) **MULTI-AXIS TOOLS FOR HANDLING AND POSITIONING BLADE ROOT COMPONENTS**
MEHRACHSIGE WERKZEUGE ZUR HANDHABUNG UND POSITIONIERUNG VON SCHAUFELFUSSBAUTEILEN
OUTILS À AXES MULTIPLES POUR LA MANIPULATION ET LE POSITIONNEMENT DE COMPOSANTS DE PIED DE PALE

(30) Priority: 29.07.2022 EP 22187812
(43) Date of publication of application: 04.06.2025
(73) Proprietor: LM Wind Power A/S, 6000 Kolding (DK)
(72) Inventor: KARSBÆK, Brian, 6000 Kolding (DK); KALLESTRUP, David, 6000 Kolding (DK); IBSEN, Christian, 6000 Kolding (DK)
(74) Representative: Bardehle Pagenberg S.L.
(86) International application number: PCT/EP2023/070992
(87) International publication number: WO 2024/023296

(56) References cited:
- EP-A1- 3 976 957
- EP-A2- 1 997 681
- DK-T3- 2 226 496
- US-A1- 2013 121 780
- US-A1- 2021 131 401

## Description

The present disclosure relates to multi-axis tools for handling and positioning a blade root component at a blade root portion of a wind turbine blade and methods for handling and positioning the blade root component at the blade root portion of the wind turbine blade.

### BACKGROUND

Modern wind turbines are commonly used to supply electricity to the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

An auxiliary system generally provided on wind turbines is the pitch system. Pitch systems are employed for adapting the position of a wind turbine blade to varying wind conditions. A pitch system normally comprises a pitch bearing comprising an outer ring, an inner ring and, between these two rings, one or more rows of rolling elements which allow both rings to rotate relative to each other.

A wind turbine blade may be attached either at the inner ring or at the outer ring, whereas the hub is connected at the other of the rings. A blade may perform a relative rotational movement with respect to the hub when a pitch system is actuated. The bearing inner ring may therefore perform a rotational movement with respect to the bearing outer ring.

Wind turbine blades have a root portion to be attached to the rotor hub (through the pitch bearing) and a tip portion at an opposite end. The root portion of the wind turbine blade usually has a generally round cross-section. Some other regions such as a profiled or an airfoil portion that is furthest away from the rotor hub, have a cross-section with an aerodynamic profile.

Blade root flanges are generally connected to the root portion of the wind turbine blade. Blade root flanges may enhance the connection of the wind turbine blade to the pitch bearing and increase the stiffness of the root portion. Blade root structural stiffeners may also be provided in the blade root portion to further increase the structural resistance of the blade root portion. Blade root flanges and blade root structural stiffeners are commonly manufactured from steel. Accordingly, blade root flanges and blade root structural stiffeners are generally heavy and difficult to handle.

In recent times there has been a trend to increase the size of wind turbine blades to capture more energy from the wind. Large wind turbines may generally involve large blade root flanges. The weight of these large blade root flanges is consequently increased.

Blade root flanges comprise a root side to face the blade root portion and a hub side to face the wind turbine hub. Mounting the blade root flange onto the blade root portion involves positioning the root side towards the blade root portion. Wind turbine blades are positioned substantially horizontal to facilitate post-moulding operations, such as mounting the blade root flange onto the blade root portion.

Blade root flanges are generally delivered in a substantially horizontal position.

Handling and positioning blade root flanges at the blade root portion may thus comprise rotating the blade root flange from the substantially horizontal position to a substantially vertical position for mounting the blade root flange to the wind turbine blade in the horizontal position.

Overhead cranes are generally used for suspending and moving the blade root flanges towards the blade root portion. However, using overhead cranes may represent a safety hazard. For example, the overhead crane may break down or the suspended load may fall. This can result in severe injuries and damages. For this reason, it is commonly forbidden for staff to work under a suspended load. Furthermore, the adjustment of the position of the blade root portion may be difficult with overhead cranes. Mounting the blade root flange may thus involve considerable time. Documents EP3976957 A1 and DK2226496 T3 disclose prior art examples of handling tools for wind turbine blade root components.

The present disclosure provides examples of tools and methods that at least partially resolve some of the aforementioned disadvantages.

### SUMMARY

In a first aspect, a multi-axis tool for handling and positioning a blade root component at a blade root portion of a wind turbine blade is provided, according to claim 1.

The tool comprises a first arm extending along a first arm direction from a first arm proximal end to a first arm distal end. In addition, the tool comprises a first arm support pivotally coupled to the first arm proximal end. The first arm is configured to pivot a first angle about a first direction. The first direction is substantially perpendicular to the first arm direction.

The tool further comprises a mounting frame configured to be releasably connected to the blade root component. The mounting frame extends a first mounting frame length along a first mounting frame direction and a second mounting frame length along a second mounting frame direction.

Furthermore, the tool comprises a connecting assembly coupling the first arm distal end to the mounting frame. The connecting assembly comprises a connecting joint for pivoting the mounting frame a second angle relative to the first arm about a second direction and a rotating connector rotatably coupling the first arm distal end with the mounting frame. The mounting frame is configured to rotate about a third direction. The second direction is substantially parallel to the first direction. The third direction is substantially perpendicular to the first mounting frame direction and to the second mounting frame direction. In addition, the tool is configured to flip and/or to rotate the blade root component when connected to the mounting frame.

According to this aspect, blade root components may be handled and positioned at the blade root portion without using overhead cranes. Thus, work under suspended loads may be reduced or even avoided. Consequently, the risk of accidents may be minimized. Furthermore, wind turbine manufacturing time may be reduced.

In addition, the tool allows flipping the blade root component when the blade root component is stored with the root side upwards. The tool allows rotating the blade root component 180° to position the root side of the blade root component facing the blade root portion and the hub side of the blade root component to face the rotor hub (when connected to the rotor hub). This allows flipping the blade root component before directing the blade root component towards the blade root portion. Using the tool of the present disclosure allows rotating the blade root component to correctly position the blade root component at the blade root portion while safety is increased. Accordingly, the tool may be used to position blade root components received with the root side facing up and the hub side facing down in a simple manner.

The mounting frame also improves the connection of the tool to the blade root component. The mounting frame may be adapted to the shape of the blade root component. A better load distribution may thus be obtained.

In a further aspect, a method for handling and positioning a blade root component at a blade root portion of a wind turbine blade is provided, according to claim 13. The method comprises releasably connecting the blade root component to a mounting frame of a multi-axis tool and pivoting the mounting frame a connecting joint angle relative to a first arm of the tool about a second direction. In addition, the method comprises pivoting the first arm a first angle relative to a first arm support of the tool about a first direction. The method further comprises rotating the mounting frame a third angle about a third direction. The third direction is substantially parallel to the first direction and the first direction is substantially parallel to the second direction.

The multi-axis tool according to any of the examples herein may be used in the method for handling and positioning the blade root component at the blade root portion of the wind turbine blade.

Advantages derived from this aspect may be similar to those mentioned regarding the previous aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 illustrates a simplified, internal view of a nacelle of a wind turbine according to one example;
Figure 3 shows a perspective view of a wind turbine blade according to one example;
Figure 4a schematically shows an isometric view of a multi-axis tool for handling and positioning a blade root component at a blade root portion of a wind turbine blade according to an example of the present disclosure;
Figure 4b shows a side view of the multi-axis tool 100 of Figure 4a;
Figure 5a schematically shows a side view of an example of a multi-axis tool in a mounting position according to an example of the present disclosure;
Figure 5b schematically shows a frontal view of the example of the multi-axis tool of figure 5a;
Figure 5c schematically shows a side view of the multi-axis tool of figure 5a in a connecting position;
Figure 6 shows an isometric view of an example of a multi-axis tool according to an example of the present disclosure;
Figure 7 shows an example of an adjustment mechanism according to an example of the present disclosure;
Figure 8 is a block diagram of a method for handling and positioning a blade root component at a blade root portion of a wind turbine blade according to an example of the present disclosure.

### DETAILED DESCRIPTION OF EXAMPLES

In these Figures, the same reference signs have been used to designate matching elements.

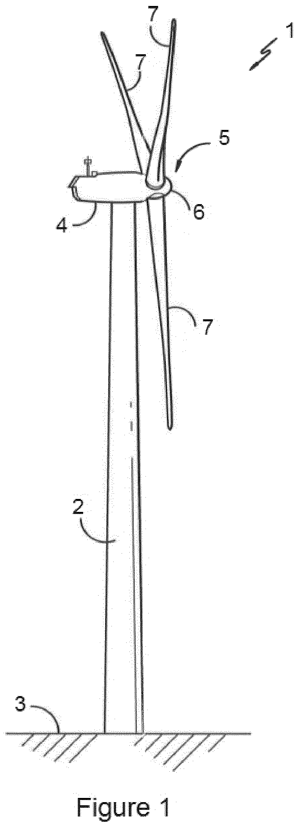

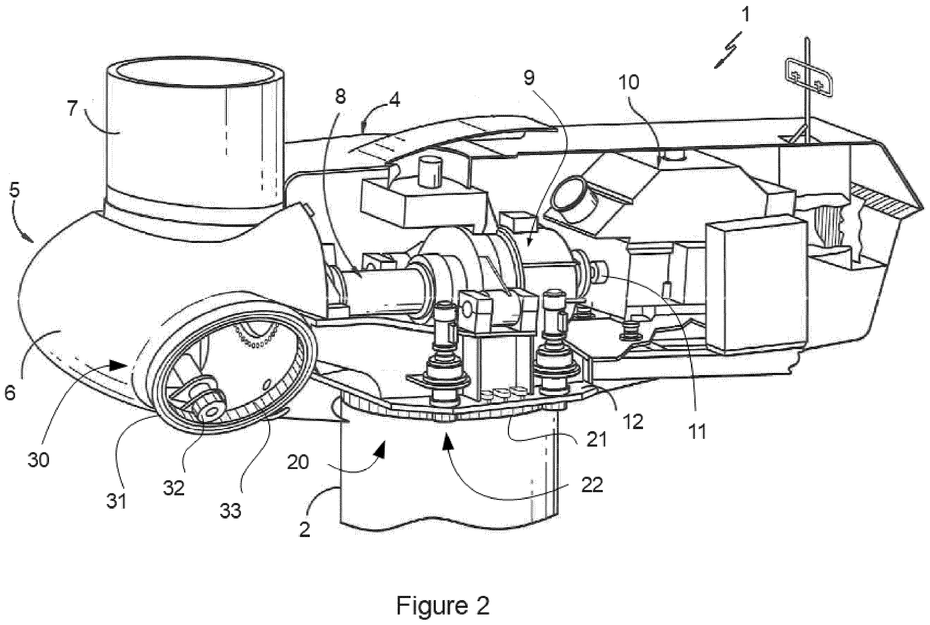

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative embodiment, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator 10 (Figure 2) positioned within the nacelle 4 or forming part of the nacelle to permit electrical energy to be produced.

Figure 2 illustrates a simplified, internal view of one example of the nacelle 4 of the wind turbine 1 of Figure 1. As shown, the electric generator 10 may be disposed within the nacelle 4. In general, the generator 10 may be coupled to the rotor 5 of the wind turbine 1 for generating electrical power from the rotational energy generated by the rotor 5. For example, the rotor 5 may include a main rotor shaft 8 coupled to the hub 6 for rotation therewith. The generator 10 may then be coupled to the rotor shaft 8 such that the rotation of the rotor shaft 8 drives the generator 10. For instance, in this figure, the generator 10 includes a generator shaft 11 rotatably coupled to the rotor shaft 8 through a gearbox 9. In other examples, the generator may be directly coupled to the rotor hub or to the rotor shaft.

It should be appreciated that the rotor shaft 8, gearbox 9, and generator 10 may generally be supported within the nacelle 4 by a bedplate or a support frame 12 positioned atop the tower 2.

The nacelle 4 is rotatably coupled to the tower 2 through a yaw system 20. The yaw system comprises a yaw bearing (not visible in Figure 2) having two bearing components configured to rotate with respect to the other. The tower 2 is coupled to one of the bearing components and the bedplate or support frame 12 of the nacelle 4 is coupled to the other bearing component. The yaw system 20 comprises a yaw annular gear 21 and a plurality of yaw drives 22 with a motor, a gearbox and a pinion for meshing with the annular gear for rotating one of the bearing components with respect to the other.

Blades 7 are coupled to the rotor hub 6 with a pitch bearing 31 in between the blade 7 and the rotor hub 6. The pitch bearing 31 comprises an inner ring and an outer ring (shown). A wind turbine blade may be attached either to the inner bearing ring or to the outer bearing ring, whereas the hub is connected to the other. A blade 7 may perform a relative rotational movement with respect to the rotor hub 6 when a pitch system 30 is actuated. The inner bearing ring may therefore perform a rotational movement with respect to the outer bearing ring. The pitch system 30 of Figure 2 comprises a pinion 32 that meshes with a pitch annular gear 33 provided on the inner bearing ring to set the wind turbine blade into rotation.

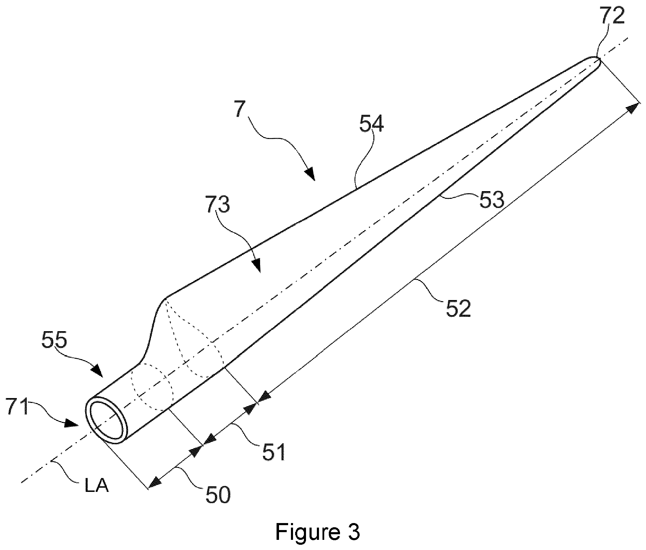

Figure 3 illustrates an example of a wind turbine blade. The wind turbine blade 7 extends in a longitudinal direction from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

In the herein disclosed examples, the length of the wind turbine blade 7 from the blade root end 71 to the blade tip end 72 is above 80 meters, for instance, above 100 meters. However, wind turbine blades 7 of any length may be used as well.

The airfoil portion 52 has a shape designed to generate lift, whereas the blade root portion 50 has a circular or elliptical cross-section for structural considerations and easy mounting of the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52.

The wind turbine blade 7 comprises a blade shell 73. The blade shell may comprise two blade shell parts, for example, a pressure side blade shell and a suction side blade shell. The pressure side blade shell may be joined, e.g. glued or bonded, to the suction side blade shell along joining lines along the leading edge 53 and the trailing edge 54. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fibre-reinforced polymer, e.g. glass fibre and/or carbon fibre.

The blade root portion 50 comprises a blade root attachment portion 55 configured to attach the blade root portion to the rotor hub. The blade root attachment portion may comprise a plurality of fastening members distributed along the root end. Blade root components may be mounted at the blade root portion 50.

A blade root flange may be an example of blade root components. The blade root flange may be connected to the blade shell 73 at the blade root attachment portion 55 to face the first bearing component. Other examples of blade root components are blade root stiffeners. Blade root stiffeners may be blade root stiffening plates or blade root stiffening rings arranged at the blade root attachment portion 55 to increase the structural resistance of the blade root portion 50. Blade root flanges and blade root stiffeners may be manufactured from metal, e.g. from steel.

A bulkhead may also be an example of a blade root component. Bulkheads may be used to substantially seal the blade root portion 50 and, in some cases, to provide a work platform at the blade root end 71. Bulkhead may be manufactured from fibre-reinforced polymer, e.g. glass fibre and/or carbon fibre.

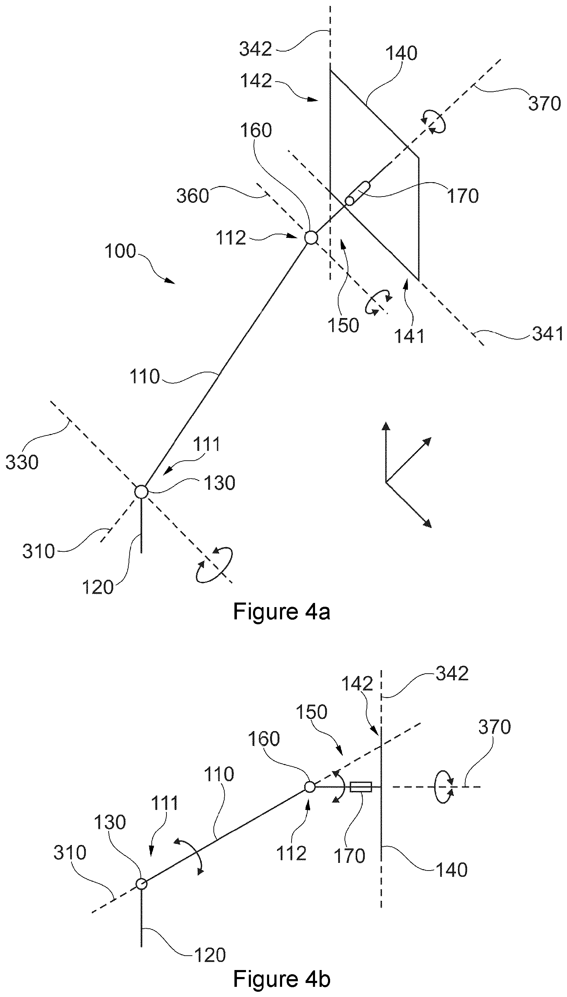

Figure 4a schematically shows an isometric view of a multi-axis tool 100 for handling and positioning a blade root component at a blade root portion of a wind turbine blade according to an example of the present disclosure. Figure 4b shows a side view of the multi-axis tool 100 of Figure 4a.

The multi-axis tool 100 comprises a first arm 110 extending along a first arm direction 310 between a first arm proximal end 111 and a first arm distal end 112. The first arm proximal end 111 is pivotally coupled to a first arm support 120. A hinge 130 pivotally connects the first arm 110 to the first arm support 120. The first arm 110 may pivot a first angle about the first direction 330. The first direction 330 is substantially perpendicular to the first arm direction 310. The rotation of the first arm 110 about the first direction 330 causes an up and down movement of the first arm distal end 112.

The multi-axis tool 100 further comprises a mounting frame 140 configured to be releasably connected to the blade root component (not shown in these figures). Examples of blade root components may be bulkheads, blade root flanges and/or blade root stiffeners. The mounting frame 140 may comprise connectors, e.g. clamps and/or fasteners, to non-permanently hold the blade root component, e.g. a blade root flange. In some examples, the connectors may be remotely operated, e.g. hydraulic clamps. In some examples, the connectors may be manually operated, e.g. manual clamps and/or fasteners. Depending on the blade root component different connectors may be used. For example, vacuum cups may be used for handling bulkheads.

The mounting frame 140 of these figures extends a first mounting frame length 141 along a first mounting frame direction 341 and a second mounting frame length 142 along a second mounting frame direction 342. The first mounting frame direction 341 of this example is substantially perpendicular to the second mounting frame direction 342. The mounting frame 140 of these figures is substantially rectangular. In other examples, the mounting frame may have any other suitable shape to be connected to the blade root component. For example, the mounting frame may be circular or elliptical.

The mounting frame 140 may comprise one or more rails extending in a direction parallel to the first mounting frame direction 341. Additionally, or alternatively, the mounting frame 140 may comprise one or more rails parallel to the second mounting frame direction 342. The length of the first rails may be adjustable. For example, some of these rails may be telescopic rails. Connectors to be releasably connected to the blade root component may be provided on the first rails and/or the second rails, e.g. at the ends of the rails. The shape of the mounting frame 140 may thus be adapted to the shape of the blade root component. For example, the same multi-axis tool 100 may be used for mounting blade root flanges at blades having different dimensions, e.g. different blade root diameters.

In addition, the multi-axis tool 100 comprises a connecting assembly 150 coupling the first arm distal end 112 to the mounting frame 140. The connecting assembly 150 comprises a connecting joint 160 and a rotating connector 170. The connecting joint 160 allows the mounting frame 140 to pivot a second angle relative to the first arm 110 about a second direction 360. The second direction 360 is substantially parallel to the first direction 330. In this example, the second direction 360 is also substantially parallel to the first mounting frame direction 341. The rotation of the mounting frame 140 about the second direction 360 causes an up and down movement of the mounting frame 140. The connecting joint 160 may be a hinge or a plurality of hinges.

In some examples, the second angle may be between 0° and 180°, i.e. the mounting frame 140 may be rotated at an angle between 0° and 180°. In these examples, the mounting frame 140 may thus pivot ±90° relative to the first arm 110. In some examples, the mounting frame 140 may pivot between ±80° and ±90°.

The combination of the rotation of the mounting frame 140 about the second direction 360 and the rotation of the first arm 110 about the first direction330 allows the tool 100 to rotate and/or flip the blade root component when connected to the mounting frame 140. Flipping the blade root component may comprise rotating 180° about a component rotation direction. The component rotation direction is substantially parallel to the second direction 360. Blade root components may thus be moved from a storage position towards the blade root portion and handled during the assembly with the blade root portion.

The rotating connector 170 of the connecting assembly 150 rotatably couples the first arm distal end 112 with the mounting frame 140. The mounting frame 140 may rotate about a third direction 370. The third direction 370 is substantially perpendicular to the first mounting frame direction 341 and to the second mounting frame direction 342.

In some examples, the mounting frame 140 may rotate an angle between 0° and 360° about the third direction 370. Accordingly, the blade root component may rotate between 0° and 360°. For example, when the blade root component is a blade root flange, the blade root flange may rotate about the center of the blade root flange.

The rotating connector 170 may be a bearing. In some examples, the rotating connector 170 comprises a first rotating component associated with the connecting joint 160 and a second rotating component associated with the mounting frame 140. The first rotating component is configured to rotate with respect to the second rotating component. The mounting frame 140 (and consequently, the blade root component when connected to the mounting frame) may rotate about the third direction 370.

The first arm support 120 of this example may be supported by a ground or by a base. The multi-axis 100 of this example comprises at least three degrees of freedom: rotation about the first direction 330, rotation about the second direction 360 and rotation about the third direction 370.

In some examples, the first arm support 120 may be fixedly connected to the base. In other examples, the first arm support may be moved relative to the base. In some examples, the base comprises a platform and supporting legs. In some examples, the base is configured to be moved by a transporting unit. A transporting unit may be a self-propelled modular transport or a forklift. As the base may be moved by a transporting unit, the tool may be stored without disturbing the manufacturing process of wind turbine blades and moved towards the manufacturing process areas when required. This may allow increasing efficiency of wind turbine blade manufacturing.

In some examples, the connecting assembly 150 comprises an adjustment mechanism to adjust a position of the mounting frame relative to the first arm. The adjustment mechanism may adjust the position of the mounting frame about a first adjustment direction that is substantially parallel to the first mounting frame direction 341. Additionally, or alternatively, the position of the mounting frame may be adjusted about the second adjustment direction that is substantially parallel to the second mounting frame direction 342. The mounting frame 140 may be rotated about the first adjustment direction and/or the second adjustment direction. The mounting frame may thus be biased with respect to the connecting joint 160. Rotations of the mounting frame about the first adjustment direction and/or the second adjustment may be between ± 5°.

The adjustment mechanism enhances the positioning of the blade root component at the blade root portion. The adjustment mechanism may comprise deformable elements configured to absorb or adjust misalignments between the blade root components and the blade root portion. The precision of the position of the blade root component at the blade root portion may be consequently increased. The deformable elements may be passive. For example, the deformable elements may be deformed by the effect of pressing the blade root components against the blade root portion. The blade root component may thus be passively aligned.

In some examples, one or more deformable elements are arranged between the rotating connector 170 and the mounting frame 140.

The tool 100 may comprise actuators to cause the movement of the first arm 110 and/or of the mounting frame 140. The actuators may be hydraulic actuators.

In some examples, the tool comprises a powering system to power the tool. Actuators to move the first arm 110 and/or the mounting frame 140 may thus be powered by the powering system. In some examples, the powering system may be configured to be connected to the electrical grid.

In other examples, the powering system may be autonomous. Consequently, the tool may be powered independently from the electrical grid. In these examples, the powering system comprises an independent power source, e.g. a battery.

The multi-axis tool of these examples may comprise a controller to control the operation of the multi-axis tool. For example, the controller may operate the powering system to activate the actuators that move the first arm 110 and/or the mounting frame 140. In some examples, the controller may remotely operate the powering system. The controller may wirelessly communicate with the powering system.

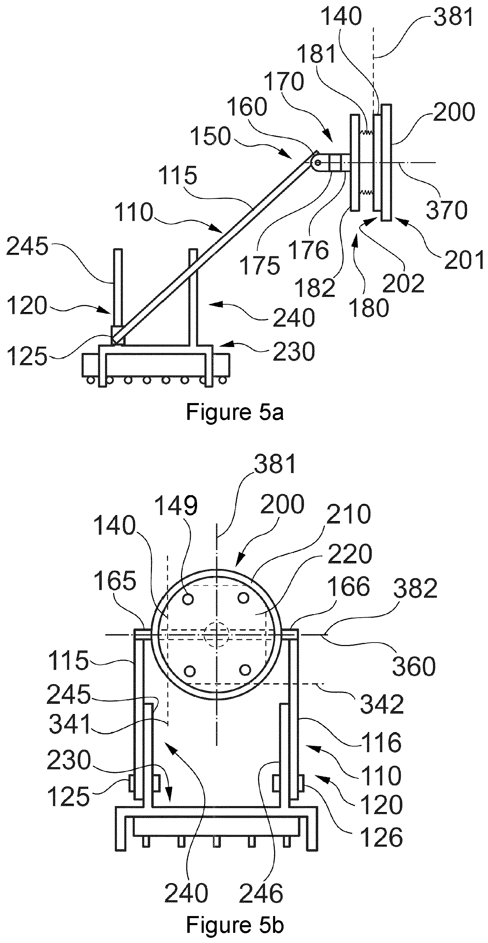

Figure 5a and 5b respectively show a side view and a frontal view of an example of a multi-axis tool 100 in a mounting position according to an example of the present disclosure. The blade root component 200 may be attached to the blade root portion when the tool 100 handles the blade root component 200 in the mounting position. In this position, a root side 201 of the blade root component 200 faces the blade root portion. The blade root component 200 may be mounted at the blade root portion at the mounting position.

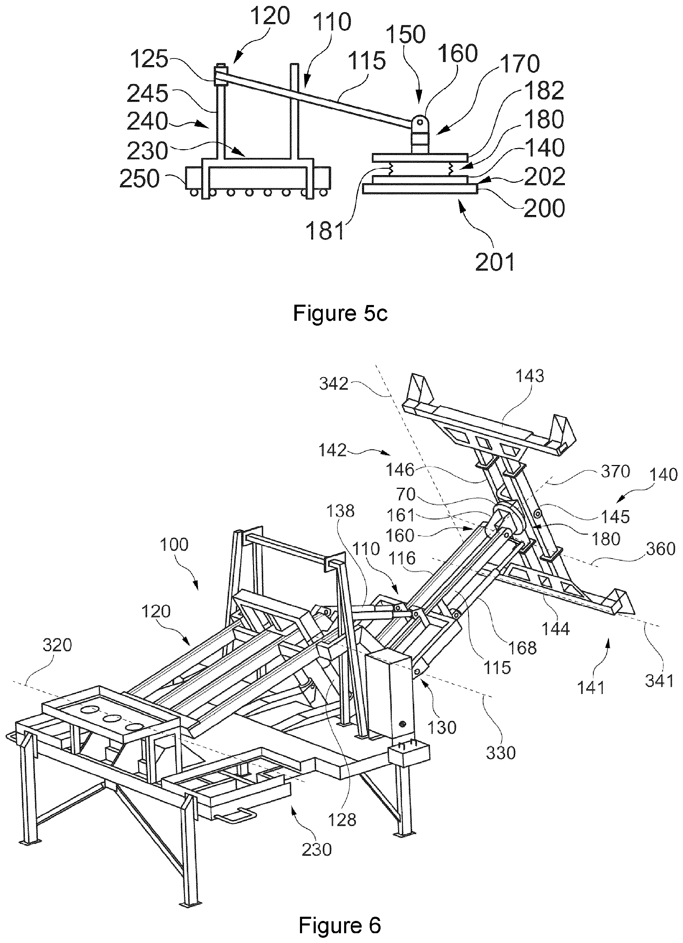

Figure 5c shows a side view of the multi-axis tool 100 of figures 5a and 5b in a connecting position. The blade root component 200 arranged at a horizontal position may be connected to the mounting frame 140 when the multi-axis tool is in the connecting position. The mounting frame 140 is connected to a hub side 202 of the blade root component 200. The root side 201 is opposite the hub side 202. In this example, the blade root component 200 is stored having the root side 201 facing the ground. However, in other examples, the blade root component 200 may be stored with the hub side 202 facing the ground.

The first arm 110, the mounting frame 140 and the connecting assembly 150 of these figures may be according to any of the examples herein disclosed.

In these figures, the blade root component 200 is releasably connected to the mounting frame 140. The blade root component 200 of these figures comprises the assembly of a mounting flange 210 and a stiffening plate 220. The stiffening plate 220 is connected to the mounting flange 210 to increase the radial stiffness of the blade root portion. The blade root component 200 of these figures is manufactured from steel. The blade root component 200 of this example may comprise a diameter between 4 and 6 meters and may weigh between 5 and 8 tones. The tool 100 may also be used for handling and positioning the blade root component having any suitable size and weight.

In this example, the mounting frame 140 comprises a plurality of connectors 148 that releasably connects the stiffening plate 220 to the mounting frame 140. The connectors 148 may be fasteners inserted into mounting holes arranged at the stiffening plate 220.

The connecting assembly 150 of these figures comprises a connecting joint 160 that rotatably connects the first arm 110 to a first rotating component 175 of the rotating connector 170. The rotating connector 170 comprises a second rotating component 176 configured to rotate with respect to the first rotating component 175 about the third direction 370. The second rotating component 176 is associated with the mounting frame 140.

In these figures, the connecting assembly 150 further comprises an adjustment mechanism 180. The adjustment mechanism 180 is configured to adjust the position of the mounting frame 140 with respect to the rotating connector 170. The adjustment mechanism 180 is arranged between the rotating connector 170 and the mounting frame 140. The adjustment mechanism 180 may adjust the position of the mounting frame 140 relative to the first arm 110 about a first adjustment direction 381 and/or a second adjustment direction 382. The first adjustment direction 381 is substantially parallel to the first mounting frame direction 341 and the second adjustment direction 382 is substantially parallel to the second mounting frame direction 342.

The adjustment mechanism 180 of these figures comprises one or more deformable elements 181 arranged between the rotating connector 170 and the mounting frame 140. In addition, the adjustment mechanism 180 of this example, comprises an adjustment plate 182 that is rigidly connected to the rotating connector 170, e.g. the second rotating component 176. The adjustment plate 182 of these figures is movably connected to the mounting frame 140. The deformable elements 181 movably connect the adjustment plate 182 to the mounting frame 140.

These one or more deformable elements 181 are configured to deform under a predetermined pressure in such a way that the position of the mounting frame 140 is adjusted relative to the adjustment plate 182. The deformable elements 181 compress under forces higher than a predetermined value. The blade root component 200, e.g. the assembly of the mounting flange 210 and the stiffening plate 220, may be positioned to rest on the blade root portion. The blade root component 200 may exercise a pressure against the blade root portion. Pressing the blade root component 200 against the blade root portion may generate a reactive pressure against the mounting frame 140. This reactive pressure against the mounting frame 140 may cause the deformation of the one or more deformable elements. The deformation of each of the deformable elements depends on the misalignment between the blade root component and the blade root portion.

In this example, the adjustment mechanism 180 comprises four deformable elements 181. The deformation of each of the deformable elements 181 causes the mounting frame 140 to pivot about the first adjustment direction 381 and about the second adjustment direction 382. The first adjustment direction 381 intersects the second adjustment direction 382 at the third direction 370. In this example, each of the deformable elements 181 is arranged at a different quarter of the plane defined between the first adjustment direction 381 and the second adjustment direction 382. Rotations of the mounting frame about the first adjustment direction 381 and/or the second adjustment direction 382 may be between ±5°.

The connecting joint 160 of this example comprises a bar extending from a left side 165 to a right side 166 along the second direction 360. The left side 165 and the right side 166 project out from the blade root component 200. The left side 165 of the connecting joint 160 comprises a hinge connected to a left bar 115 of the first arm 110. The right side 166 of the connecting joint 160 is connected to the right side 166 of the connecting joint 160 through a hinge.

In this example, the mounting frame 140 can rotate about the second direction 360 at least 180°. For example, the multi-axis tool 100 of this example allows positioning and handling the stored blade root component 200 having the root side 201 downwards at the blade root portion in a single operation. No operations of disconnecting and connecting the blade root component 200 again to the mounting frame 140 when the blade root component 200 is flipped are thus required.

The first arm 110 may comprise a plurality of parallel bars. In this example, the first arm 110 comprises the first arm left bar 115 and the first arm right bar 116. These bars extend along the first arm direction.

The first arm support 120 is rotatably connected to the first arm 110 about the first direction. The first arm support 120 may comprise a plurality of sleeves. In this example, the first arm support 120 comprises a left sleeve 125 and a right sleeve 126. The left sleeve 125 is pivotally connected to the left bar 115 of the first arm 110 and the right sleeve 126 is pivotally connected to the right bar 116 of the first arm 110.

The tool 100 of these figures further comprises a base 230 and one or more columns 240 extending from the base 230. The first arm support 120 may be slidably connected to the one or more columns 240 so that the first arm support 120 is configured to be moved up and down relative to the base 230. In this example, the tool 100 comprises a pair of front columns and a pair of rear columns. The left sleeve 125 of the first arm support is slidably connected to the rear left column 245 and the right sleeve 126 is slidably connected to the rear right column 246. The sleeves may thus be guided by the rear columns. Accordingly, the left sleeve 125 and the right sleeve 126 can be moved up and down relative to the base 230 and to the ground. In this example, the front columns may also be used for guiding the movement of the left bar 115 and of the right bar 116 of the first arm 110.

The tool 100 of these figures is configured to be moved about four degrees of freedom. In addition to the three degrees of freedom of the example of figures 4a - 4b, the first arm support 120 may also be lifted and lowered in a vertical direction. The precision of positioning the blade root component 200 may thus be increased.

The base 230 of these figures comprises a platform and a plurality of supporting legs resting on the ground. The platform may be configured to be lifted and lowered to allow transporting the tool 100. In some examples, these supporting legs may be retracted for transporting the base 230 (and consequently the whole tool 100) with a transporting unit 250. In some examples, the transporting unit 250 may lift and lower the base 230. The transporting unit 250 of this example is a self-propelled modular transport. The self-propelled modular transport may be used for transporting the multi-axis tool 100 from a storage area to a zone of a manufacturing plant when the blade root component is assembled with the blade root portion.

The platform may comprise dedicated areas to arrange counterweights to counteract the weight of the blade root component.

Figure 6 shows an isometric view of an example of a multi-axis tool 100 according to an example of the present disclosure.

The mounting frame 140 of this figure extends a first mounting frame length 141 along a first mounting frame direction 341 and a second mounting frame length 142 along a second mounting frame direction 342. In this example, the mounting frame comprises a mounting frame upper bar 143 and a mounting frame lower bar 144 extending in a direction parallel to the first mounting frame direction 341. In this figure, the upper bar 143 and the lower bar 144 are telescopic. The first mounting frame length 141 of this example may thus be varied to fit the shape of the blade root component. The ends of the upper bar 143 and of the lower bar 144 comprise a connector to be connected to the blade root component (not shown in this figure). In this figure, each connector comprises a bracket with a hole. A fastener may be inserted through the hole to secure the blade root connector to the mounting frame 140.

In this figure, the upper bar 143 is connected to the lower bar 144 through a mounting frame left bar 145 and a mounting frame right bar 146. The mounting frame left bar 145 and the mounting frame right bar 146 of the mounting frame 140 of this example are telescopic. The second mounting frame length 142 may thus be adjusted to the shape of the blade root component.

In other examples, the mounting frame may be according to any of the examples herein.

In this example, the adjustment mechanism 180 movably connects the mounting frame 140, e.g. the left bar 145 and the right bar 146, to the rotating connector 170. The adjustment mechanism 180 and the rotating connector 170 of this example, may be according to any of the examples herein disclosed. The mounting frame 140 may thus be rotated about the third direction 370.

The connecting joint 160 of this example comprises a bracket 161 connected to the first rotating component of the rotating connector 170. The bracket 161 comprises a pair of webs, each of them having a hole. A pin may be inserted through these holes to hingedly connect the bracket 161 to the first arm left bar 115 and/or to the first arm right bar 116 of the first arm 110. The bracket of the connecting joint 160 may thus pivot about the second direction 360. The first arm left bar 115 of the first arm 110 extends parallel to the first arm right bar 116 from a distal end to a proximal end. In this example, the first arm left bar 115 and the first arm right bar 116 are substantially straight.

The multi-axis tool 100 of this example comprises a connecting joint actuator 168 to pivot the mounting frame 140 relative to the first arm 110. The connecting joint actuator 168 may be a hydraulic actuator.

The connecting joint actuator 168 of this figure comprises a connecting joint actuator proximal end connected to the first arm 110 and a connecting joint actuator distal end connected to the bracket 161. The connecting joint actuator 168 extends from the connecting joint actuator proximal end to the connecting joint actuator distal end. The connecting joint actuator is configured to change its length to cause the rotation of the mounting frame 140 relative to the first arm 110 a second angle about the second direction 360.

In this example, the second angle may be between 0° and 176°, i.e. the mounting frame 140 may rotate at an angle between 0° and 176°. For example, the mounting frame 140 may pivot between ±80° and ±88°, e.g. ±87°, about the second direction 360 relative to the first arm 110.

The first arm 110 is pivotally coupled with the first arm support 120 through the hinge 130 to pivot about the first direction 330. The first arm 110 may thus pivot a first angle about the first direction 330. The first angle may be between 0° and 60°. The first arm 110 may thus pivot at an angle between 0° and 60°. Or in other words, the first arm 110 may pivot ±30° relative to the first arm support 120.

In this figure, a first arm actuator 138 may be operated to cause the rotation of the first arm 110 relative to the first arm support 120. The first arm actuator 138 may be a hydraulic actuator. The first arm actuator 138 of this figure comprises first arm actuator proximal end connected to the first arm support 120 and a first arm actuator distal end connected to the first arm 110. A change in the length of the first arm actuator 138 causes the first arm 110 to pivot about the first direction 330.

The first arm support 120 extends from a first arm support distal end to a first arm support proximal end. The first arm support distal end is pivotally coupled to the first arm proximal end 111 through the hinge 130. The first arm support proximal end is pivotally coupled to the base 230 to pivot a fourth angle about a fourth direction 320. The fourth direction 320 is substantially parallel to the first direction 330.

The fourth angle may be between 0° and 60°, e.g. between 0° and 30°. Tilting the first arm support relative to the base 230 causes a lifting movement of the first arm distal end.

In this example, a first arm support actuator 128 causes the movement of the first arm support 120 relative to the base 230. The first arm support actuator 128 may be and may operate according to any of the examples of actuators herein disclosed.

The first arm support 120 of this example comprises a substantially curved or angled shape. The first arm support 120 extends in a curved manner from the first arm support distal end to a first arm support proximal end. The first arm support 120 may comprise a plurality of parallel bars. In this example, the first arm support 120 comprises four parallel bars. In other examples, the first arm support may comprise any suitable number of parallel bars.

The base 230 of this example comprises a platform and a plurality of supporting legs to support the platform. The base 230 may be according to any of the examples herein disclosed, e.g. may be configured to be transported by a transporting unit. Furthermore, the multi-axis tool 100 of this example may comprise a controller and/or powering system according to any of the examples herein disclosed.

The multi-axis tool 100 according to this example thus comprises four degrees of freedom. Controlling the second angle about the second direction 360, the first angle about the first direction 330 and the fourth angle about the fourth direction 320 allows rotating and/or flipping the blade root component to a desired position. For example, the blade root component may be rotated 180° to position the root side of the blade root component facing the blade root portion.

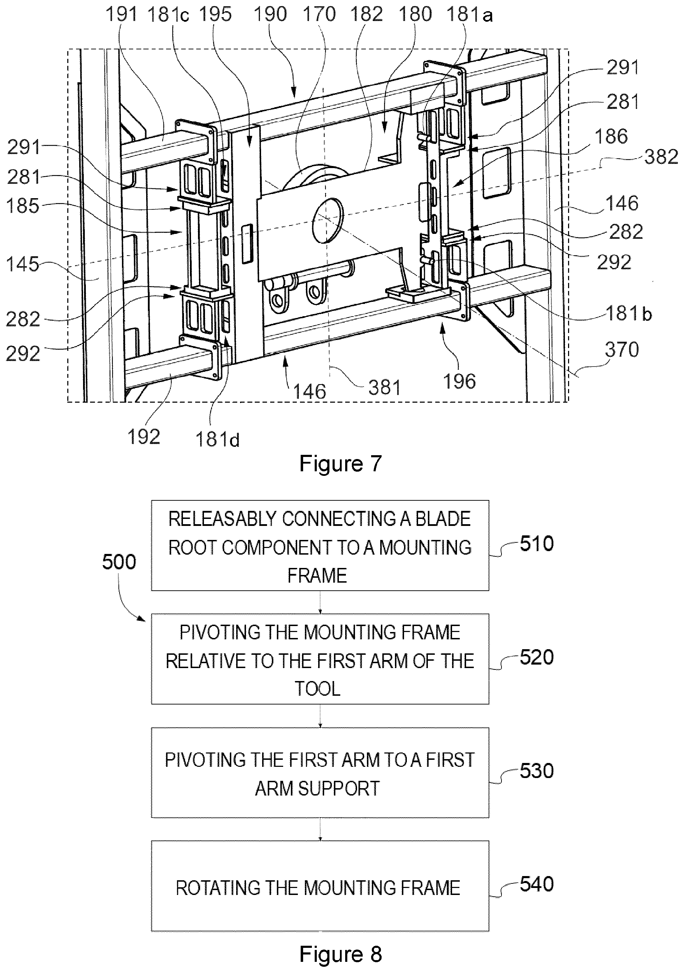

Figure 7 shows an example of an adjustment mechanism 180 according to an example of the present disclosure. The adjustment mechanism 180 of this figure may be comprised in any of the examples of multi-axis tools herein disclosed.

The adjustment mechanism 180 comprises an adjustment plate 182 fixedly connected to the second rotating component of the rotating connector 170 and movably connected to the mounting frame 140.

The mounting frame 140 of this example comprises a left bar 145 and a right bar 146.

An upper transversal bar 191 and a lower transversal bar 192 connect the left bar 145 to the right bar 146. In this figure, the mounting frame further comprises an adjustment fixture 190. The adjustment fixture 190 is rigidly connected to the lower transversal bar 192 and to the upper transversal bar 191. In this figure, the adjustment fixture 190 comprises a right beam 196 and a left beam 195 extending between the upper transverse bar 191 and the lower transverse bar 192. The right beam 196 and the left beam 195 comprise a recess.

In this example, the adjustment plate 182 comprises a right extension 186 and a left extension 185. The right extension 186 of the adjustment plate 182 engages the recess of the right beam 196 of the mounting frame 140 and projects outwardly from the right beam 196. Similarly, the left extension 185 engages the recess of the left beam 195 and projects outwardly from the left beam 195.

The left beam 195 of this example further comprises an upper sliding surface 291 and a lower sliding surface 292. The left extension 185 also comprises an upper sliding surface 281 and a lower sliding surface 282. The upper sliding surface 291 of the mounting frame 140 is configured to slide relative to the upper sliding surface 281 of the adjustment mechanism 180. Similarly, the lower sliding surface 292 is configured to slide relative to the lower sliding surface 282.

In this figure, the right beam 196 also comprises an upper sliding surface 291 and a lower sliding surface 292. The upper sliding surface 291 of the right beam 196 is configured to slide relative to an upper sliding surface 281 of the right extension 186 of the adjustment plate 182 and the lower sliding surface 292 of the right beam 196 is configured to slide relative to a lower sliding surface 282 of the right extension 186.

The adjustment plate 182 of the adjustment mechanism 180 may thus slide relative to the adjustment fixture 190 of the mounting frame. The sliding surfaces are substantially parallel to the third direction 370. The adjustment plate 182 further comprises a plurality of pins that extends in a direction substantially parallel to the first adjustment direction 381. The pins of the adjustment plate 182 are inserted into guiding slots provided on the mounting frame 140 to limit the movement of the adjustment plate with respect to the mounting frame.

The adjustment mechanism 180 of this example further comprises a plurality of deformable elements to misalign the adjustment plate 182 with respect to the mounting frame 140. In this figure, the deformable elements are four springs. However, other types of deformable elements and a different number of deformable elements may also be suitable.

The spring 181a connects an upper and a right portion of the adjustment plate 182 with an upper portion of the right beam 196 of the adjustment fixture 190 of the mounting frame 140. The spring 181b connects a lower and a right portion of the adjustment plate 182 with a lower portion of the right beam 196. It should be noted that the springs 181a and 181b are visible in figure 7 since the right beam 196 has not been completely depicted.

Similar to the springs 181a and 181b, the springs 181c and 181d respectively connect an upper portion of the adjustment plate 182 to an upper portion of the left beam 195 and a lower portion of the adjustment plate 182 to a lower portion of the left beam 195. The compression of the springs 181a - d causes the adjustment plate 182 to slide with respect to the mounting frame 140.

The degree of compression of each spring depends on the force applied. The force applied in each spring depends on the misalignment of the blade root component relative to the blade root portion. A misalignment of the blade root component relative to the blade root portion may generate a non-uniform pressure from the blade root portion towards the blade root component.

For example, a non-uniform pressure from the blade root portion towards the blade root component when the blade root portion is aligned with the blade root portion may compress the spring 181a. The compression of the spring 181a causes a rotation of the adjustment plate 182 about the first adjustment direction 381 and about the second adjustment direction 382. In case the springs 181a and 181b were compressed, the adjustment plate 182 would only rotate about the first adjustment direction 381.

The rotation of the adjustment plate 182 relative to the mounting frame 140 may be limited by the guiding slots and/or the sliding surfaces. In this example, the mounting frame 140 may pivot ±5° about the first adjustment direction 381 and/or the second adjustment direction 382. The adjustment mechanism 180 provides fine tuning of the position of the blade root component during the assembly with the blade root portion.

Figure 8 is a block diagram of a method for handling and positioning a blade root component at a blade root portion of a wind turbine blade according to an example of the present disclosure. The method 500 may use the multi-axis tool according to any of the examples herein disclosed.

At block 510, releasably connecting the blade root component to a mounting frame of a multi-axis tool. The mounting frame may be releasably connected to the blade root component according to any of the examples herein disclosed. A plurality of connectors, e.g. bolts, may be employed to connect the mounting frame to the blade root component. For example, the mounting frame may be bolted to a stiffening plate of the blade root component.

Releasably connecting the blade root component may comprise positioning the mounting frame to face the hub side of the blade root component. Depending on how the blade root component is delivered or stored, the root side of the blade root component may be upwards or downwards. In some examples, blade root components may be stored on drop-off stools. In other examples, blade root components may be stored in pallets, e.g. in euro pallets.

In some examples, when the blade root component is stored with the hub side upwards, the mounting frame is moved towards the hub side. Then, the mounting frame is releasably connected to the blade root component and the blade root component is lifted.

In other examples, when the blade root component is stored with the hub side downwards, i.e. facing the ground, the mounting frame may be positioned below the blade root component in order to face the hub side. Placing the blade root component on drop-off stools may provide a height between the ground and the blade root component to allow positioning the mounting frame below the blade root component.

After connecting the mounting frame to the blade root component, the blade root component may be lifted and moved towards the blade root component. The blade root component is moved from a substantially horizontal position, i.e. connecting position, when the blade root component is stored to a substantially vertical position, i.e. mounting position, to mount or attach the blade root component to the blade root portion.

Handling and positioning the blade root component at the blade root portion comprises pivoting 520 the mounting frame a second angle relative to a first arm of the tool about a second direction; pivoting 530 the first arm a first angle relative to a first arm support of the tool about a first direction and rotating 540 the mounting frame a third angle about a third direction. The first direction is substantially parallel to the second direction and substantially perpendicular to the third direction.

Blocks 520, 530 and 540 disclosed herein are not constrained to a particular order. In some examples, the mounting frame may pivot relative to the first arm about the second direction, then the first arm may pivot relative to the first arm support about the first direction, and subsequently, the mounting frame may be rotated about the third direction. In other examples, the first arm may pivot relative to the first arm support about the first direction and then the mounting frame may pivot relative to the first arm.

The mounting frame may pivot a second angle according to any of the examples herein disclosed. The second angle may be comprised between 0° and 180°, e.g. between 0° and 176°. Pivoting the mounting frame about the second direction may involve operating a connecting joint actuator.

The first arm may pivot a first angle according to any of the examples herein disclosed. The first angle may be between 0° and 60°. A first arm actuator may be operated to pivot the first arm relative to the first arm support.

In some examples, the method further comprises pivoting the first arm support relative to a base supporting the tool. The first arm support can pivot a fourth angle about a fourth direction. The fourth direction is substantially parallel to the first direction. The fourth angle may be comprised between 0° and 60°. A first arm support actuator may be operated to cause the movement of the first arm support relative to the base.

In further examples, the first arm support may be lifted and lowered, for example, according to the example of figures 5a - 5c.

In some examples, the method 500 comprises flipping the blade root component when the blade root component is releasably connected to the mounting frame. Pivoting the mounting frame and/or the first arm and/or the first arm supporting according to any of the examples herein disclosed may involve flipping the blade root component. The blade root component may thus be rotated 180°, i.e. rotated from a position at which the root side faces the ground to a position at which the hub side faces the ground.

A rotating actuator may be operated to rotate a first rotating component of a rotating connector of a connecting assembly according to any of the examples herein disclosed. The mounting frame, and consequently, the blade root component may be rotated clockwise or anticlockwise about the third direction. This rotation allows the blade root component to fit the end portion of the blade root portion. For example, the blade root component may be rotated to make coincide the connecting holes of the blade root components with connecting holes of the blade root portion. Fasteners may then be inserted through these holes to secure the blade root component to the blade root portion.

The mounting frame may extend a first mounting frame length along a first mounting frame direction and a second mounting frame length along a second mounting frame direction. The multi-axis tool may comprise an adjustment mechanism according to any of the examples herein disclosed. In these examples, the method 500 comprises adjusting a position of the mounting frame about a first adjustment direction and/or a second adjustment direction. The first adjustment direction is substantially parallel to the first mounting frame direction and the second adjustment direction is substantially parallel to the second mounting frame direction.

In some examples, adjusting the position of the mounting frame about a first adjustment direction and/or a second adjustment direction comprises placing the blade root component to contact the root end surface of the blade root portion. The mounting frame may press the blade root component against the blade root portion. If the blade root component is misaligned, deformable elements of the adjusting mechanism deform to adapt the position of the blade root component to the blade root portion. Positioning of the blade root component at the blade root portion may thus be precisely performed. Attaching the blade root component to the blade root portion may thus be more easily performed.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. If reference signs related to drawings are placed in parentheses in a claim, they are solely for attempting to increase the intelligibility of the claim, and shall not be construed as limiting the scope of the claim.

## Claims

1. A multi-axis tool (100) for handling and positioning a blade root component (200) at a blade root portion (50) of a wind turbine blade (7) to mount the blade root component (200) at the blade root portion (50), the tool (100) comprising:
a first arm (110) extending along a first arm direction (310) from a first arm proximal end (111) to a first arm distal end (112);
a first arm support (120) pivotally coupled to the first arm proximal end (111), wherein the first arm (110) is configured to pivot a first angle about a first direction (330), and wherein the first direction (330) is substantially perpendicular to the first arm direction (310);
a mounting frame (140) configured to be releasably connected to the blade root component (200), the mounting frame (140) extending a first mounting frame length (141) along a first mounting frame direction (341) and a second mounting frame length (142) along a second mounting frame direction (342);
a connecting assembly (150) coupling the first arm distal end (112) to the mounting frame (140), wherein the connecting assembly comprises:
a connecting joint (160) for pivoting the mounting frame (140) a second angle relative to the first arm (110) about a second direction (360), wherein the second direction (360) is substantially parallel to the first direction (330); and
a rotating connector (170) rotatably coupling the first arm distal end (112) with the mounting frame (140), wherein the mounting frame (140) is configured to rotate about a third direction (370), wherein the third direction (370) is substantially perpendicular to the first mounting frame direction (341) and to the second mounting frame direction (342); and
wherein the tool (100) is configured to rotate and/or flip the blade root component (200) when connected to the mounting frame (140).

2. The tool (100) according to claim 1, to flip the blade root component (200) comprises to rotate 180° about a component rotation direction, the component rotation direction being substantially parallel to the second direction (360).

3. The tool (100) according to any of claims 1 - 2, wherein the connecting assembly (150) comprises an adjustment mechanism (180) to adjust a position of the mounting frame (140) relative to the first arm (110) about a first adjustment direction (381) substantially parallel to the first mounting frame direction (341) and/or a second adjustment direction (382) substantially parallel to the second mounting frame direction (342).

4. The tool (100) according to claim 3, wherein the adjustment mechanism (180) comprises one or more deformable elements (181, 181a, 181b, 181c, 181d) arranged between the rotating connector (170) and the mounting frame (140).

5. The tool (100) according to claim 4, wherein the adjustment mechanism (180) comprises:
an adjustment plate (182) rigidly connected to the rotating connector (170) and movably connected to the mounting frame (140);
wherein the one or more deformable elements (181, 181a, 181b, 181c, 181d) connect the adjustment plate (182) to the mounting frame (140); and
wherein the one or more deformable elements (181, 181a, 181b, 181c, 181d) are configured to deform under a predetermined pressure in such a way that the position of the mounting frame (140) is adjusted relative to the adjustment plate (182).

6. The tool (100) according to any of claims 1 - 5, further comprising:
a first arm actuator (138) to pivot the first arm (110) relative to the first arm support (120); and
a connecting joint actuator (168) to pivot the mounting frame (140) relative to the first arm (110).

7. The tool (100) according to claim 6, wherein the first arm actuator (138) and/or the connecting joint actuator (168) are hydraulic actuators.

8. The tool (100) according to any of claims 1 - 7, further comprising:
a base (230); and
a column (240, 245, 246) extending from the base (230), wherein the first arm support (120) is slidably connected to the column (240, 245, 246) and wherein the first arm support (120) is configured to be moved up and down relative to the base (230).

9. The tool (100) according to any of claims 1 - 7, further comprising:
a base (230);
wherein the first arm support (120) extends from a first arm support distal end to a first arm support proximal end, wherein the first arm support distal end is pivotally coupled to the first arm proximal end (111); and
wherein the first arm support proximal end is pivotally coupled to the base (230) to pivot a fourth angle about a fourth direction (320), wherein the fourth direction (320) is substantially parallel to the first direction (330).

10. The tool (100) according to any of claims 8 - 9, wherein the base (230) is configured to be moved by a transporting unit (250).

11. The tool (100) according to any of claims 1 - 10, further comprising a powering system to power the tool.

12. The tool (100) according to any of claims 1 - 11, wherein the blade root component (200) comprises a bulkhead, a blade root flange (210) and/or a blade root stiffener (220).

13. A method (500) for handling and positioning a blade root component (200) at a blade root portion (50) of a wind turbine blade (7) with the tool (100) according to any of claims 1 - 12 to mount the blade root blade component (200) at the blade root portion (50), the method (500) comprising:
releasably connecting (510) the blade root component (200) to a mounting frame (140) of a multi-axis tool (100);
pivoting (520) the mounting frame (140) a second angle relative to a first arm (110) of the tool (100) about a second direction (360);
pivoting (530) the first arm (110) a first angle relative to a first arm support (120) of the tool (100) about a first direction (330), the second direction (360) being substantially parallel to the first direction (330); and
rotating (540) the mounting frame (140) a third angle about a third direction (370), the third direction (370) being substantially perpendicular to the second direction (360).

14. The method (500) according to claim 13, wherein the mounting frame (140) extends a first mounting frame length (141) along a first mounting frame direction (341) and a second mounting frame length (142) along a second mounting frame direction (342); and wherein the method (500) further comprises adjusting a position of the mounting frame (140) about a first adjustment direction and/or a second adjustment direction, the first adjustment direction (381) being substantially parallel to the first mounting frame direction (341) and the second adjustment direction (382) being substantially parallel to the second mounting frame direction (342).

15. The method (500) according to any of claims 13 - 14, further comprising flipping the blade root component (200) when the blade root component (200) is releasably connected to the mounting frame (140).

## Patentansprüche

1. Ein mehrachsiges Werkzeug (100) zum Handhaben und Positionieren einer Blattwurzelkomponente (200) an einem Blattwurzelabschnitt (50) eines Windturbinenblatts (7), um die Blattwurzelkomponente (200) am Blattwurzelabschnitt (50) zu montieren, wobei das Werkzeug (100) umfasst:
einen ersten Arm (110), der sich entlang einer ersten Armrichtung (310) von einem ersten Armproximalende (111) zu einem ersten Armdistalende (112) erstreckt;
eine erste Armstütze (120), die schwenkbar mit dem ersten Arm-Proximalende (111) verbunden ist, wobei der erste Arm (110) so konfiguriert ist, dass er um einen ersten Winkel um eine erste Richtung (330) schwenkt, und wobei die erste Richtung (330) im Wesentlichen senkrecht zur ersten Armrichtung (310) ist;
einen Befestigungsrahmen (140), der so konfiguriert ist, dass er lösbar mit der Blattwurzelkomponente (200) verbunden werden kann, wobei sich der Befestigungsrahmen (140) über eine erste Befestigungsrahmenlänge (141) entlang einer ersten Befestigungsrahmenrichtung (341) und über eine zweite Befestigungsrahmenlänge (142) entlang einer zweiten Befestigungsrahmenrichtung (342) erstreckt;
eine Verbindungsbaugruppe (150), die das distale Ende (112) des ersten Arms mit dem Befestigungsrahmen (140) koppelt, wobei die Verbindungsbaugruppe umfasst:
ein Verbindungsgelenk (160) zum Schwenken des Befestigungsrahmens (140) um einen zweiten Winkel relativ zum ersten Arm (110) um eine zweite Richtung (360), wobei die zweite Richtung (360) im Wesentlichen parallel zur ersten Richtung (330) ist; und
einem Drehverbinder (170), der das distale Ende (112) des ersten Arms drehbar mit dem Befestigungsrahmen (140) verbindet, wobei der Befestigungsrahmen (140) so konfiguriert ist, dass er sich um eine dritte Richtung (370) dreht, wobei die dritte Richtung (370) im Wesentlichen senkrecht zur ersten Befestigungsrahmenrichtung (341) und zur zweiten Befestigungsrahmenrichtung (342) ist; und
wobei das Werkzeug (100) so konfiguriert ist, dass es die Blattwurzelkomponente (200) drehen und/oder umdrehen kann, wenn es mit dem Befestigungsrahmen (140) verbunden ist.

2. Das Werkzeug (100) gemäß Anspruch 1 wobei zum Drehen der Blattwurzelkomponente (200) eine Drehung um 180° um eine Komponenten-Drehrichtung umfasst, wobei die Komponenten-Drehrichtung im Wesentlichen parallel zur zweiten Richtung (360) ist.

3. Das Werkzeug (100) gemäß einem der Ansprüche 1 bis 2, wobei die Verbindungsbaugruppe (150) einen Einstellmechanismus (180) umfasst, um eine Position des Befestigungsrahmens (140) relativ zum ersten Arm (110) um eine erste Einstellrichtung (381), die im Wesentlichen parallel zur ersten Befestigungsrahmenrichtung (341) ist, und/oder eine zweite Einstellrichtung (382) im Wesentlichen parallel zur zweiten Befestigungsrahmenrichtung (342) einzustellen.

4. Das Werkzeug (100) gemäß Anspruch 3, wobei der Einstellmechanismus (180) ein oder mehrere verformbare Elemente (181, 181a, 181b, 181c, 181d) umfasst, die zwischen dem drehbaren Verbinder (170) und dem Befestigungsrahmen (140) angeordnet sind.

5. Das Werkzeug (100) gemäß Anspruch 4, wobei der Einstellmechanismus (180) umfasst:
eine Einstellplatte (182), die starr mit dem Drehverbinder (170) verbunden und beweglich mit dem Befestigungsrahmen (140) verbunden ist;
wobei das eine oder die mehreren verformbaren Elemente (181, 181a, 181b, 181c, 181d) die Einstellplatte (182) mit dem Befestigungsrahmen (140) verbinden; und
wobei das eine oder die mehreren verformbaren Elemente (181, 181a, 181b, 181c, 181d) so konfiguriert sind, dass sie sich unter einem vorbestimmten Druck derart verformen, dass die Position des Befestigungsrahmens (140) relativ zur Einstellplatte (182) eingestellt wird.

6. Das Werkzeug (100) gemäß einem der Ansprüche 1 bis 5, ferner umfassend:
einen ersten Armaktuator (138) zum Schwenken des ersten Arms (110) relativ zur ersten Armhalterung (120); und
einen Verbindungsgelenkaktuator (168) zum Schwenken des Befestigungsrahmens (140) relativ zum ersten Arm (110).

7. Das Werkzeug (100) gemäß Anspruch 6, wobei der erste Armaktuator (138) und/oder der Verbindungsgelenkaktuator (168) hydraulische Aktuatoren sind.

8. Das Werkzeug (100) gemäß einem der Ansprüche 1 bis 7, das ferner umfasst:
eine Basis (230); und
eine Säule (240, 245, 246), die sich von der Basis (230) erstreckt, wobei die erste Armhalterung (120) verschiebbar mit der Säule (240, 245, 246) verbunden ist und wobei die erste Armhalterung (120) so konfiguriert ist, dass sie relativ zur Basis (230) nach oben und unten bewegt werden kann.

9. Das Werkzeug (100) gemäß einem der Ansprüche 1 bis 7, ferner umfassend:
eine Basis (230);
wobei sich die erste Armstütze (120) von einem distalen Ende der ersten Armstütze zu einem proximalen Ende der ersten Armstütze erstreckt, wobei das distale Ende der ersten Armstütze schwenkbar mit dem proximalen Ende des ersten Arms (111) verbunden ist; und
wobei das proximale Ende der ersten Armstütze schwenkbar mit der Basis (230) verbunden ist, um einen vierten Winkel um eine vierte Richtung (320) zu schwenken, wobei die vierte Richtung (320) im Wesentlichen parallel zur ersten Richtung (330) ist.

10. Das Werkzeug (100) gemäß einem der Ansprüche 8 bis 9, wobei die Basis (230) so konfiguriert ist, dass sie durch eine Transporteinheit (250) bewegt werden kann.

11. Das Werkzeug (100) gemäß einem der Ansprüche 1 bis 10, das ferner ein Antriebssystem zum Antreiben des Werkzeugs umfasst.

12. Das Werkzeug (100) gemäß einem der Ansprüche 1 bis 11, wobei die Blattwurzelkomponente (200) eine Trennwand, einen Blattwurzelflansch (210) und/oder eine Blattwurzelversteifung (220) umfasst.

13. Verfahren (500) zum Handhaben und Positionieren einer Blattfußkomponente (200) an einem Blattfußabschnitt (50) eines Windturbinenblatts (7) mit dem Werkzeug (100) gemäß einem der Ansprüche 1 bis 12, um die Blattfußkomponente (200) am Blattfußabschnitt (50) zu montieren, wobei das Verfahren (500) umfasst:
das lösbare Verbinden (510) der Blattfußkomponente (200) mit einem Befestigungsrahmen (140) eines mehrachsigen Werkzeugs (100);
das Schwenken (520) des Befestigungsrahmens (140) um einen zweiten Winkel relativ zu einem ersten Arm (110) des Werkzeugs (100) um eine zweite Richtung (360);
das Schwenken (530) des ersten Arms (110) um einen ersten Winkel relativ zu einer ersten Armhalterung (120) des Werkzeugs (100) um eine erste Richtung (330), wobei die zweite Richtung (360) im Wesentlichen parallel zur ersten Richtung (330) ist; und
das Drehen (540) des Befestigungsrahmens (140) um einen dritten Winkel um eine dritte Richtung (370), wobei die dritte Richtung (370) im Wesentlichen senkrecht zur zweiten Richtung (360) ist.

14. Verfahren (500) nach Anspruch 13, wobei sich der Befestigungsrahmen (140) über eine erste Befestigungsrahmenlänge (141) entlang einer ersten Befestigungsrahmenrichtung (341) und über eine zweite Befestigungsrahmenlänge (142) entlang einer zweiten Befestigungsrahmenrichtung (342) erstreckt; und wobei das Verfahren (500) ferner das Einstellen einer Position des Befestigungsrahmens (140) um eine erste Einstellrichtung und/oder eine zweite Einstellrichtung umfasst, wobei die erste Einstellrichtung (381) im Wesentlichen parallel zur ersten Befestigungsrahmenrichtung (341) ist und die zweite Einstellrichtung (382) im Wesentlichen parallel zur zweiten Befestigungsrahmenrichtung (342) ist.

15. Das Verfahren (500) gemäß einem der Ansprüche 13 bis 14, das ferner das Umdrehen der Blattwurzelkomponente (200) umfasst, wenn die Blattwurzelkomponente (200) lösbar mit dem Befestigungsrahmen (140) verbunden ist.

## Revendications

1. Outil multiaxial (100) destiné à manipuler et à positionner un composant de racine de pale (200) au niveau d'une partie de racine de pale (50) d'une pale d'éolienne (7) afin de monter le composant de racine de pale (200) au niveau de la partie de racine de pale (50), l'outil (100) comprenant :
un premier bras (110) s'étendant le long d'une première direction de bras (310) depuis une première extrémité proximale de bras (111)jusqu'à une première extrémité distale de bras (112) ;
un premier support de bras (120) couplé de manière pivotante à l'extrémité proximale (111) du premier bras, dans lequel le premier bras (110) est configuré pour pivoter selon un premier angle autour d'une première direction (330), et dans lequel la première direction (330) est sensiblement perpendiculaire à la première direction de bras (310) ;
un cadre de montage (140) configuré pour être relié de manière amovible au composant de racine de pale (200), le cadre de montage (140) s'étendant sur une première longueur de cadre de montage (141) le long d'une première direction de cadre de montage (341) et sur une deuxième longueur de cadre de montage (142) le long d'une deuxième direction de cadre de montage (342) ;
un ensemble de connexion (150) couplant l'extrémité distale du premier bras (112) au cadre de montage (140), dans lequel l'ensemble de connexion comprend :
un joint de connexion (160) pour faire pivoter le cadre de montage (140) d'un deuxième angle par rapport au premier bras (110) autour d'une deuxième direction (360), dans lequel la deuxième direction (360) est sensiblement parallèle à la première direction (330) ; et
un connecteur rotatif (170) couplant de manière rotative l'extrémité distale du premier bras (112) au cadre de montage (140), dans lequel le cadre de montage (140) est configuré pour tourner autour d'une troisième direction (370), dans lequel la troisième direction (370) est sensiblement perpendiculaire à la première direction du cadre de montage (341) et à la deuxième direction du cadre de montage (342) ; et
dans lequel l'outil (100) est configuré pour faire tourner et/ou retourner le composant de base de lame (200) lorsqu'il est connecté au cadre de montage (140).

2. L'outil (100) selon la revendication 1, pour retourner le composant de base de lame (200), comprend la rotation de 180° autour d'une direction de rotation du composant, la direction de rotation du composant étant sensiblement parallèle à la deuxième direction (360).

3. L'outil (100) selon l'une quelconque des revendications 1 à 2, dans lequel l'ensemble de connexion (150) comprend un mécanisme de réglage (180) pour régler une position du cadre de montage (140) par rapport au premier bras (110) autour d'une première direction de réglage (381) sensiblement parallèle à la première direction du cadre de montage (341) et/ou d'une deuxième direction de réglage (382) sensiblement parallèle à la seconde direction du cadre de montage (342).

4. L'outil (100) selon la revendication 3, dans lequel le mécanisme de réglage (180) comprend un ou plusieurs éléments déformables (181, 181a, 181b, 181c, 181d) disposés entre le connecteur rotatif (170) et le cadre de montage (140).

5. L'outil (100) selon la revendication 4, dans lequel le mécanisme de réglage (180) comprend :
une plaque de réglage (182) reliée de manière rigide au connecteur rotatif (170) et reliée de manière mobile au cadre de montage (140) ;
dans lequel le ou les éléments déformables (181, 181a, 181b, 181c, 181d) relient la plaque de réglage (182) au cadre de montage (140) ; et
dans lequel le ou les éléments déformables (181, 181a, 181b, 181c, 181d) sont configurés pour se déformer sous une pression prédéterminée de telle sorte que la position du cadre de montage (140) soit ajustée par rapport à la plaque de réglage (182).

6. L'outil (100) selon l'une quelconque des revendications 1 à 5, comprenant en outre :
un premier actionneur de bras (138) pour faire pivoter le premier bras (110) par rapport au premier support de bras (120) ; et
un actionneur de joint de connexion (168) pour faire pivoter le cadre de montage (140) par rapport au premier bras (110).

7. L'outil (100) selon la revendication 6, dans lequel le premier actionneur de bras (138) et/ou l'actionneur de joint de connexion (168) sont des actionneurs hydrauliques.

8. L'outil (100) selon l'une quelconque des revendications 1 à 7, comprenant en outre :
une base (230) ; et
une colonne (240, 245, 246) s'étendant à partir de la base (230), dans lequel le support de premier bras (120) est relié de manière coulissante à la colonne (240, 245, 246) et dans lequel le support de premier bras (120) est configuré pour être déplacé vers le haut et vers le bas par rapport à la base (230).

9. L'outil (100) selon l'une quelconque des revendications 1 à 7, comprenant en outre :
une base (230) ;
dans lequel le premier support de bras (120) s'étend depuis une extrémité distale du premier support de bras jusqu'à une extrémité proximale du premier support de bras, dans lequel l'extrémité distale du premier support de bras est couplée de manière pivotante à l'extrémité proximale du premier bras (111) ; et
dans lequel l'extrémité proximale du premier support de bras est couplée de manière pivotante à la base (230) pour pivoter selon un quatrième angle autour d'une quatrième direction (320), dans lequel la quatrième direction (320) est sensiblement parallèle à la première direction (330).

10. L'outil (100) selon l'une quelconque des revendications 8 à 9, dans lequel la base (230) est configurée pour être déplacée par une unité de transport (250).

11. L'outil (100) selon l'une quelconque des revendications 1 à 10, comprenant en outre un système d'alimentation pour alimenter l'outil.

12. L'outil (100) selon l'une quelconque des revendications 1 à 11, dans lequel le composant de racine de pale (200) comprend une cloison, une bride de pied de pale (210) et/ou un renfort de pied de pale (220).

13. Procédé (500) pour manipuler et positionner un composant de racine de pale (200) au niveau d'une partie de racine de pale (50) d'une pale d'éolienne (7) à l'aide de l'outil (100) selon l'une quelconque des revendications 1 à 12 afin de monter le composant de racine de pale (200) au niveau de la partie de racine de pale (50), le procédé (500) comprenant :
la connexion amovible (510) du composant de racine de pale (200) à un châssis de montage (140) d'un outil multiaxial (100) ;
faire pivoter (520) le cadre de montage (140) un deuxième angle par rapport à un premier bras (110) de l'outil (100) autour d'une deuxième direction (360) ;
faire pivoter (530) le premier bras (110) un premier angle par rapport à un premier support de bras (120) de l'outil (100) autour d'une première direction (330), la deuxième direction (360) étant sensiblement parallèle à la première direction (330) ; et
faire tourner (540) le cadre de montage (140) un troisième angle autour d'une troisième direction (370), la troisième direction (370) étant sensiblement perpendiculaire à la deuxième direction (360).

14. Procédé (500) selon la revendication 13, dans lequel le cadre de montage (140) s'étend sur une première longueur de cadre de montage (141) le long d'une première direction de cadre de montage (341) et sur une deuxième longueur de cadre de montage (142) le long d'une deuxième direction de cadre de montage (342) ; et dans lequel le procédé (500) comprend en outre l'ajustement d'une position du cadre de montage (140) autour d'une première direction d'ajustement et/ou d'une deuxième direction d'ajustement, la première direction d'ajustement (381) étant sensiblement parallèle à la première direction du cadre de montage (341) et la deuxième direction d'ajustement (382) étant sensiblement parallèle à la deuxième direction du cadre de montage (342).

15. Le procédé (500) selon l'une quelconque des revendications 13 à 14, comprenant en outre le retournement du composant de pale de racine (200) lorsque le composant de racine de pale (200) est relié de manière amovible au cadre de montage (140).
